# EUROPEAN PATENT APPLICATION

(11) **EP 1 458 164 A2**
(43) Date of publication of application: **15.09.2004**
(21) Application number: 04005642.6
(22) Date of filing: 10.03.2004
(51) Int. Cl.: H04L 29/06, H04L 12/28, H04J 3/16, H04Q 11/00

(54) **Method, apparatus and computer readable storage medium for authentication of optical network units in an Ethernet Passive Optical Network EPON**

(30) Priority: 10.03.2003 KR 2003014845
(71) Applicant: Samsung Electronics Co., Ltd., Suwon-city, Gyeonggi-do (KR)
(72) Inventor: Kim, Su-Hyung, Yeongtong-gu, Suwon-si, Gyeonggi-do (KR); Kim, Young-Seok, Yeongtong-gu, Suwon-si, Gyeonggi-do (KR); Oh, Yun-Je, Yeongtong-gu, Suwon-si, Gyeonggi-do (KR)
(74) Representative: Grünecker, Kinkeldey, Stockmair & Schwanhäusser Anwaltssozietät

(57) **Abstract**

Based on link security method to be discussed in IEEE (Institute of Electrical and Electronics Engineers) 802, for which standardization is to progress while centering on IEEE 802.3 and 802.1d, provided is an authentication method capable of allowing an OLT (42) to implement functions of a RADIUS server to authenticate ONUs (41). An MD-5 algorithm, adapted to be used between the OLT and the RADIUS server, in accordance with its use between the OLT and the ONUs, is simplified so that it is usable in an EPON architecture. A computer-readable recording medium recorded with a program implements the authentication method. The authentication method includes the step of sending a start code (401) from an optical network unit (ONU) to an optical line terminal (OLT). The ONU receives in response a request for an identifier of the ONU. From the ONU's response (403) that includes the identifier, the OLT determines whether the authentication succeeds or fails and sends the respective message (404) to the ONU, as well as an additional message (405) informing the ONU that the authentication process has terminated.

## Description

The present invention relates to link security to be discussed in IEEE (Institute of Electrical and Electronics Engineers) 802, for which standardization is to progress while centering on IEEE 802.3 and 802.1d. Such link security may be implemented through authentication methods based on IEEE 802.1x (port-based network access control) or SDE (Secure Data Exchange) architectures based on IEEE 802.10. In particular, the present invention implements a simple and effective authentication method based on IEEE 802.1x which is applicable to authentication in EPON (Ethernet Passive Optical Network) architectures.

IEEE 802.1x supports both an authentication protocol between each terminal and bridged-LAN equipment, that is, EAPOL (EAP (Extensible Authentication Protocol) over LANs), and a protocol between bridged-LAN equipment and a RADIUS (Remote Authentication Dial-In User Services) server, that is, EAP over RADIUS described in RFC 2869.

To implement authentication in existing architectures, an external RADIUS server should be installed. In wireless-LANs, authentication protocols proposed by IEEE 802.1x are used to implement authentication for subscribers. The authentication protocols include PAP (Password Authentication Protocol), CHAP (Challenge Handshake Authentication Protocol), EAP (Extended Authentication Protocol), etc. In authentication, use is made of an MD-5 (Message Digest-5) algorithm to provide a hash function for enciphering a PDU (Protocol Data Unit). In particular, the enciphering process is carried out between an authenticator and a RADIUS server for passwords in RADIUS frames.

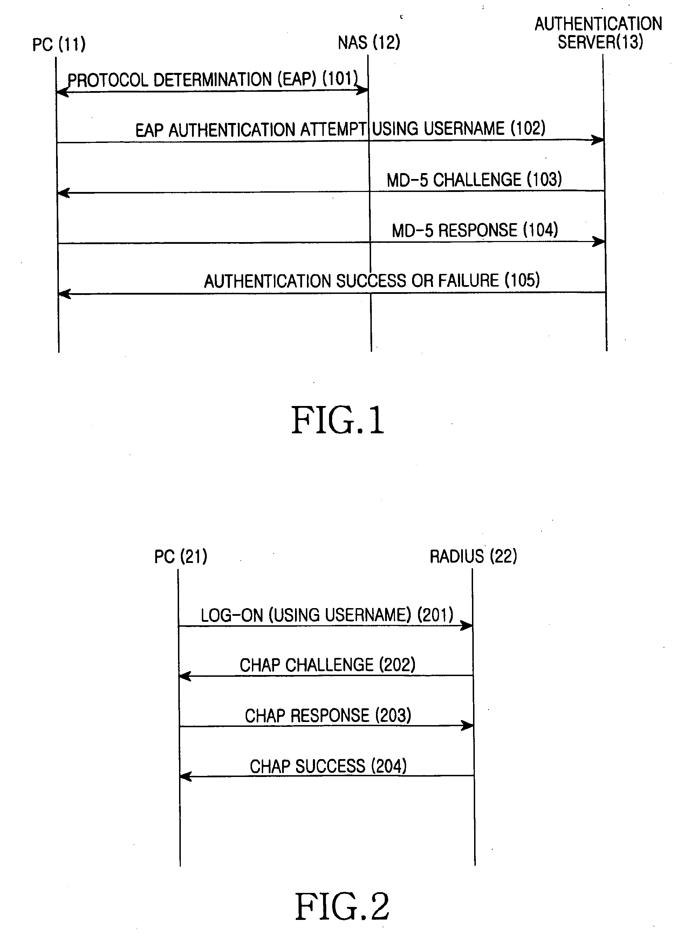

Fig. 1 is a diagram illustrating a signal flow in an example of a conventional EAP authentication method using an MD-5 challenge. A system for a general EAP authentication includes a PC (Personal Computer) 11 as a client, an authentication server 13 for providing authentication services, and a NAS (Network Access Server) 12 for network access.

In operation, first, an authentication protocol is determined between the PC I 1 and the NAS 12 (101). In this process, the NAS 12 performs only a relay operation to the authentication server 13. The NAS 12 also serves to permit use of a port, based on an authentication established between the authentication server 13 and the PC 11. Next, the PC 11 attempts an EAP authentication to the authentication server 13, using a username (102). In response to the authentication attempt, the authentication server 13 transmits, to the PC 11, an MD-5 challenge containing a challenge value for a hash function (103). The PC 11 then transmits, to the authentication server 13, an MD-5 response containing a hash value (104). If the transmitted MD-5 response is correct, it is determined that a successful authentication has been established. In this case, the authentication server 13 transmits an authentication success message (105). Subsequently, the authentication server 13 is connected with a destination address. If, on the other hand, the MD-5 response transmitted from the PC 11 to the authentication server 13 is incorrect, it is determined that authentication has failed. In this case, the authentication server 13 transmits an authentication failure message (105), and rejects access of the PC 11 thereto.

Fig. 2 is a diagram illustrating conventional signal flow using CHAP in the above-illustrated EAP authentication process. "CHAP," also referred to as "MD-5 CHAP," provides high-level security for unauthorized access by enciphering responses, using an industrial standard-based MD-5 unidirectional table. When a PC 21, that is, an access client, logs on to a RADIUS server 22, using a username (201), the RADIUS server 22 transmits to the PC 21 a CHAP challenge consisting of a session ID and an optional challenge character string (202). The PC 21 then sends, to the RADIUS server 22, a CHAP response message containing the username and challenge string unidirectionally enciphered by an optional cipher, the session ID, and the cipher (203). The RADIUS server 22 checks the CHAP response message, and transmits a CHAP success message if the CHAP response message is valid (204), thereby allowing access of the PC 21 thereto.

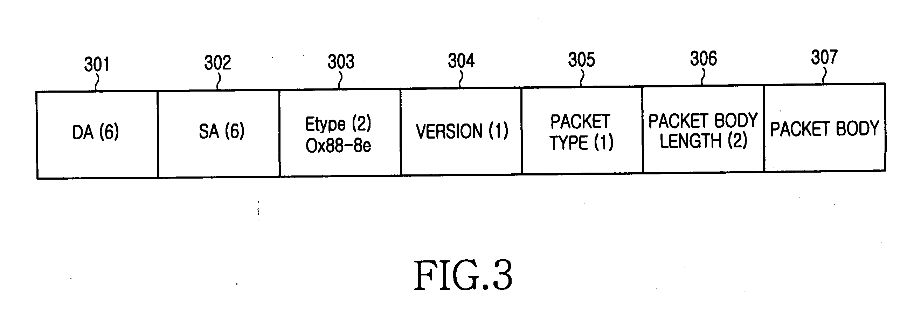

Fig. 3 is a diagram illustrating an example of a general EAPOL frame format consisting of a destination address (DA) 301, a source address (SA) 302, an Ethertype (Etype) 303, a version 304, a packet type 305, a packet body length 306, and a packet body 307. The Etype 303 represents the frame structure of an EAP using "0x88-8e". However, such an Ethertype "0x88-8e" is used in existing wireless LANs, and so an Ethertype other than Ethertype "0x88-8e" should be used to avoid confusion.

EPON, currently undergoing active standardization by the IEEE 802 Standardization Institute, operates in a point-to-multipoint type optical communication network, as compared to conventional point-to-point Ethernets, and therefore enjoys economical advantages as compared to point-to-point type networks. Active research is in progress for a centrally-concentrated MAC (Media Access Control) protocol called a "MPCP (Multi-Point Control Protocol)" and a scheme for emulating a point-to-point delivery on an EPON. However, although IEEE 802.1x is expected to provide a basic guide for standard authentication by virtue of specifying a control operation in the unit of ports, security is problematic in the above-described EPON since there is currently no defined standard for authenticating a target terminal. It is therefore necessary to design an authentication protocol usable in EPON architectures.

In this connection, however, the conventional authentication methods illustrated in Figs. 1 and 2 have various problems. First, where architectures using existing RADIUS servers are used for authentication of optical network units (ONUs), they involve an increase in operating costs and inefficient operation because an external server should be additionally constructed for a desired authentication, even when the number of ONUs is small. Second, it is difficult to use an EAP between an ONU (Optical network Unit) and an OLT (Optical Line Terminal). Where the existing Ethernet type is used in an overlapping fashion for ONUs, there is a problem in that it is impossible to distinguish the Ethernet types for wireless LANs and EPON from each other because the respective Ethemet types are identical. There is accordingly a need to use frames of a new Ethertype different from the existing Ethernet type or of a new format which can be easily implemented.

Third, it is necessary to modify or simplify the authentication protocol for the ONU and OLT.

Fourth, the conventional IEEE 802.1x-based architectures cannot be used for EPON architectures using logical link IDs (LLIDs) for port control because they operate on the basis of a bridge-based port control function.

It is the object of the present invention to provide an authentication method that causes an OLT to implement functions of a RADIUS server to authenticate ONUs.

This object is solved by the subject matters of the independent claims.

Preferred embodiments are defined in the dependent claims.

The method simplifies an MD-5 algorithm, adapted to be used between the OLT and the RADIUS server, in accordance with its use between the OLT and the ONUs in an EPON architecture. Further, a computer-readable recording medium recorded with a program is provided for implementing the authentication method.

In an aspect of the invention, control of ports is enabled using a password and an LLID mapping table, as compared to conventional architectures in which control of ports is achieved using MAC addresses.

In one aspect, the present invention provides an authentication method in an Ethernet passive optical network (EPON) comprising the steps of: (A) causing an optical line terminal (OLT) to receive, from an optical network unit (ONU), a packet informing of the start of an authentication process, and, responsive to that receipt, controlling the OLT to transmit, to the ONU, a packet for requesting an identifier of the ONU; (B) causing the OLT to receive from the ONU the identifier and to compare the identifier to a previously stored value to determine whether the identifier corresponds to the previously stored value; (C) transmitting an authentication success packet to the ONU when it is determined that the correspondence exists; (D) transmitting an authentication failure packet to the ONU when it is determined that the correspondence does not exist; and (E) after completion of step (C) or (D), controlling the OLT to inform the ONU that an authentication process has ended.

In accordance with another aspect, the present invention provides an authentication method in an Ethemet passive optical network (EPON) comprising the steps of: (A) controlling an optical network unit (ONU) to transmit, to an optical line terminal (OLT), a packet informing of the start of an authentication process, and causing the ONU to receive, from the OLT, a packet for requesting an identifier of the ONU; (B) controlling the ONU to transmit to the OLT the identifier of the ONU; (C) receiving at the ONU an authentication success packet in response to transmission of the authentication success packet when it is determined that a correspondence exists between the identifier and a value previously stored in the OLT, and proceeding with processing at the ONU based on that determination; (D) receiving at the ONU an authentication success packet in response to transmission of the authentication failure packet when it is determined that the correspondence does not exist, and proceeding with processing at the ONU based on the determination that the correspondence does not exist; and (E)causing the ONU to receive, from the OLT, a packet informing that an authentication process has ended, the informing packet being sent as a result of said determination of step (C) or (D).

In accordance with another aspect, the present invention provides an authentication apparatus in an Ethernet passive optical network (EPON) comprising: a bus interface for inputting data from an external router, and outputting data to the external router; a control unit for receiving an OAM (Operation, Administration and Maintenance) packet in accordance with an authentication process and to control data services for an optical network unit (ONU); and a downstream unit for switching data received via the bus interface under control of the control unit.

The above advantages of the present invention will become more apparent by describing in detail preferred embodiments thereof with reference to the attached drawings in which:
Fig. 1 is a diagram illustrating a signal flow in an example of a conventional EAP authentication method using an MD-5 challenge;
Fig. 2 is a diagram illustrating a signal flow in an example of a conventional authentication method using a CHAP;
Fig. 3 is a diagram illustrating an example of a general EAPOL frame format;
Fig. 4 is a flow chart illustrating a method for establishing an authentication between an ONU and an OLT in an EPON in accordance with the present invention;
Fig. 5 is a diagram illustrating an example of the structure of an authentication packet used in the method for establishing an authentication between the ONU and the OLT in the EPON in accordance with the present invention; and
Fig. 6 is a block diagram illustrating an example of an LLID authentication processing block of the OLT for the authentication process according to the present invention.

Preferred embodiments of the present invention will be described in detail with reference to the annexed drawings. In the following description of the present invention, a detailed description of known functions and configurations incorporated herein will be omitted for clarity.

Although IEEE 802.1x can implement both an authentication protocol between each terminal and bridged-LAN equipment, that is, EAPOL, and a protocol between bridged-LAN equipment and a RADIUS server, that is, EAP over RADIUS described in RFC 2869, the present invention implements a RADIUS function using an OLT.

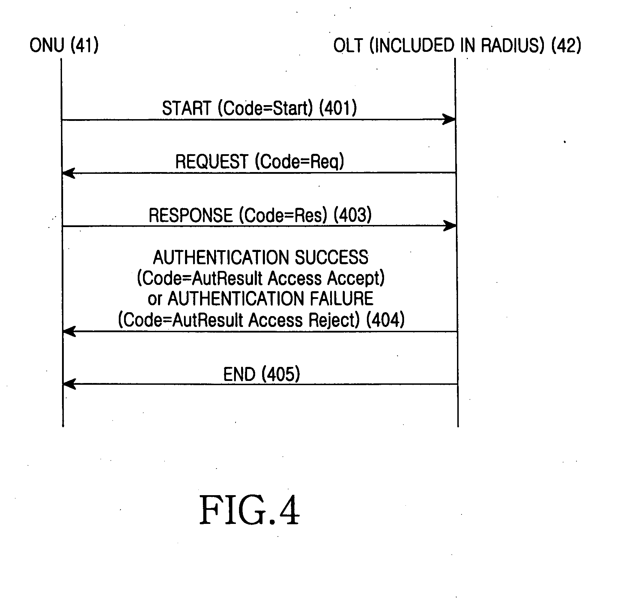

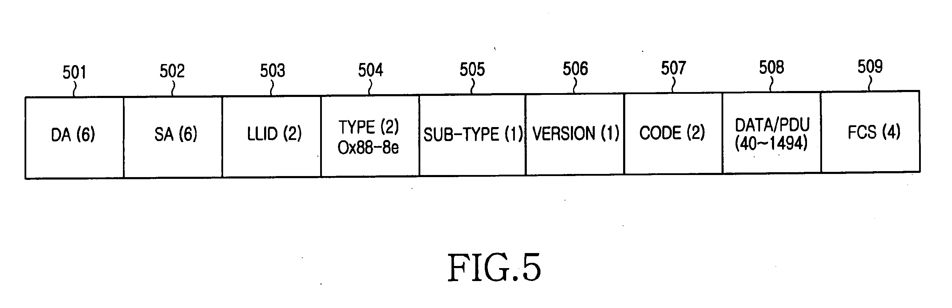

Fig. 4 is a flow chart illustrating a method for establishing an authentication between an ONU and an OLT in an EPON in accordance with the present invention. The ONU first sends, to the OLT, a packet informing of the start of an authentication process (401). In the OLT, packets to be exchanged between the ONU and the OLT are newly defined, as discussed further below with regard to Fig. 5. The start packet has a code value corresponding to "Start" representing the start of an authentication operation.

When the authentication operation starts, the OLT sends a packet requesting identification of a usemame (402). At this time, the code value of the packet has a value corresponding to "Request" representing the request for identification of the usemame.

In response to the "Request" packet, the ONU sends the usemame to the OLT (403). At this time, the code value of the packet has a value corresponding to "Response" representing the response.

The OLT then identifies the characteristic value or identifier of the ONU entrained in the authentication packet sent by the ONU (the usemame in the illustrated embodiment). When the OLT identifies the ONU to have a valid "Username", it sends an authentication success packet, that is, an access accept packet (404). On the other hand, where the ONU has an invalid "Username", the OLT sends an authentication reject packet, that is, an access reject packet (404). The ONU proceeds with processing based on the determination that the "Username" is either valid or invalid.

After the access acceptance or rejection (404), the OLT transmits, to the ONU, a packet informing of the end of the authentication process (405). At this time, the packet has a code value corresponding to "Authentication End".

Fig. 5 illustrates an example of the structure of an authentication packet used in the method for establishing an authentication between the ONU and the OLT in the EPON in accordance with the present invention. As shown in Fig. 5, the authentication packet consists of a destination address (DA), a source address (SA), a logical link identifier (LLID), a type, a sub-type, a version, a code, a data/PDU, and a frame check sequence (FCS).

The DA field 501 indicates a destination of the packet, the SA field 502 indicates a source of the packet, the LLID field 503 indicates a logical link identifier, the type field 504 indicates the Ethertype of the packet, the sub-type field 505 identifies the packet when its type field 504 is identical to those of other packets, the version field 506 indicates version information of the packet, the code field 507 indicates an authentication operation based on the packet, the data/PDU field 508 indicates data of the packet, and the FCS field 509 indicates FCS information for detecting errors of a frame, corresponding to the packet, included in information to be transmitted in the unit of frames. The FCS information is arranged at a tail end of the frame.

In particular, the authentication packet incorporates the IEEE 802.3ah EFM sub-type "0x04" into a conventional OAM (Operation, Administration and Maintenance) frame. This frame format is usable without any problem until other Ethertypes are settled, because IEEE 802.3ah does not use the Sub-type "0x04," and avoids the above noted possibility of confusion that might otherwise result from use of the Etype "0x888e."

The version or code field 506 indicates how the authentication packet operates. Respective operations of authentication packets are described in the following Table 1:

**Table 1**

| Code | Name | Contents |
|---|---|---|
| x00 | Start | Start of Authentication Process |
| 0x01 | Request | Request for Authentication Contents (LLID) |
| 0x02 | Response | Transmission of Authentication Contents (LLID) |
| 0x03 | End | End of Authentication Process |
| 0x04 | AutResult Access Accept | Success of Authentication |
| 0x05 | AutResult Access Reject | Rejection of Authentication |

In accordance with the above described authentication process, the OLT of the EPON performs an authentication of the ONU. In association with this operation, the OLT needs a processing block for processing functions required for the authentication process after an initial registration process for the ONU to alleviate the need to provide data services to the ONU, not authenticated yet, in a downstream direction (OLT → ONU). The processing block further alleviates the need to prevent a flooding attack on a port of a particular server, using a port level control function in an upstream direction (ONU → OLT).

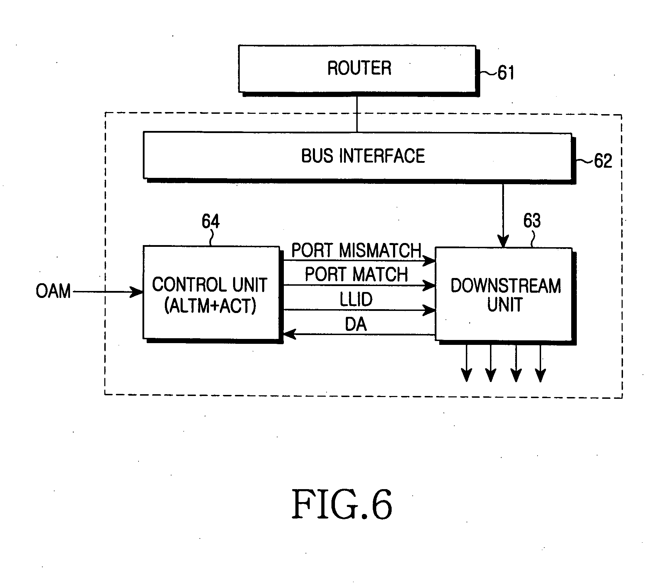

Fig. 6 illustrates an example of an LLID authentication processing block of the OLT according to the present invention. The block includes a bus interface 62 for performing inputting/outputting of data with respect to an external router 61, a control unit 64 for receiving an OAM packet according to an authentication process, thereby controlling data services for the ONU, and a downstream unit 63 for switching data received via the bus interface 62 under the control of the control unit 64.

Based on a received OAM frame such as that of Fig. 5 and using "ALTM (Address Lookup Table Management) + ACT (Authentication Control Table)," the control unit 64 controls a switching operation of a port included in the downstream unit. The use of ALTM protocol enables communication between ONUs in a point-to-multipoint PON architecture, such as in a shared LAN architecture. Typically, ALTM is implemented using CAM (Contents Address Memory).

When an ONU connected to the OLT desires to transmit data to the OLT, it performs the data transmission in a state in which an LLID is inserted in the data to be transmitted. The OLT looks up a destination MAC address in its ALT. Where the OLT determines that the destination MAC address corresponds to a station in the OLT, it changes the LLID prior to transmission of desired data. The ALTM block performs a function of newly changing or deleting the SA field of a received frame.

Using this function, it is possible to re-transmit, to ONUs downstream of the OLT, LLIDs respectively changed based on MAC addresses of the ONUs by looking up the MAC addresses in a table completely created in a learning process. Using a filtering function, each ONU can receive only a frame transmitted thereto. Thus, communication between ONUs is possible.

After an initial registration of the ACT, each ONU inputs an LLID assigned thereto through a scheduler of the OLT and its MAC address to the ALT of the OLT as initial values, and then sends, to the OLT, a "Start" frame requesting an authentication thereof. The MAC address is transmitted to the OLT in a state of being included in a username of the associated ONU, so that it is used as a parameter needed for an authentication of the ONU.

The OLT compares an LLID, newly inputted through a "Response" frame, with the corresponding LLID previously assigned and inputted to the ALT, in terms of MAC addresses. Only when the MAC addresses are identical to each other, does the OLT provide desired services in accordance with its port control operation.

The authentication method carried out using "ALTM + ACT" proceeds as follows. First, the control unit 64 receives an OAM frame. When "Usemame" in a "Start" frame is identical to a value previously set in the OLT, the control unit 64 sends a "Request" frame, and inputs an LLID to the downstream unit 63. When an authentication success is subsequently made, based on a "Response" frame from the ONU, the control unit 64 generates a port match signal, thereby normally connecting ports corresponding to the LLID. On the other hand, when an authentication fails, the control unit 64 generates a port mismatch signal, thereby preventing the ports from being connected.

An example of the ACT is described in the following Table 2:

**Table 2**

| | | | |
|---|---|---|---|
| LLID Input | Authentication LLID Previously Defined | Authentication Result | MAC Address |

As apparent from the above description, the present invention provides a simple protocol for authenticating ONUs in an EPON and avoid the overlapping of Ethertypes that might otherwise occur when wireless LANs are used.

In addition, it is possible to use existing algorithms without implementing any RADIUS server, and to implement a reliable authentication method in a port-controlled fashion using LLIDs.

The above described method of the present invention can be implemented in the form of a computer-readable program, so that it can be stored on a recording medium such as CD-ROM, floppy disk, hard disk, or magnetooptic disc.

While this invention has been described in connection with what is presently considered to be the most practical and preferred embodiment, it is to be understood that the invention is not limited to the disclosed embodiment, but, on the contrary, it is intended to cover various modifications within the scope of the appended claims.

## Claims

1. An authentication method in an Ethernet passive optical network comprising the steps of:
(A) causing an optical line terminal to receive; from an optical network unit, a packet informing of the start of an authentication process, and, responsive to that receipt, controlling the optical line terminal to transmit, to the optical network unit, a packet for requesting an identifier of the optical network unit;
(B) causing the optical line terminal to receive from the optical network unit the identifier and to compare the identifier to a previously stored value to determine whether the identifier corresponds to the previously stored value;
(C) transmitting an authentication success packet to the optical network unit when it is determined at the step (B) that the correspondence exists;
(D) transmitting an authentication failure packet to the optical network unit when it is determined at the step (B) that the correspondence does not exist; and
(E) after completion of the step (C) or (D), controlling the optical line terminal to inform the optical network unit that an authentication process has ended.

2. An authentication method in an Ethernet passive optical network comprising the steps of:
(A) controlling an optical network unit to transmit, to an optical line terminal, a packet informing of the start of an authentication process, and causing the optical network unit to receive, from the optical line terminal, a packet for requesting an identifier of the optical network unit;
(B) controlling the optical network unit to transmit to the optical line terminal the identifier of the optical network unit;
(C) receiving at the optical network unit an authentication success packet in response to transmission of the authentication success packet when it is determined that a correspondence exists between the identifier and a value previously stored in the optical line terminal, and proceeding with processing at the optical network unit based on that determination;
(D) receiving at the optical network unit an authentication success packet in response to transmission of the authentication failure packet when it is determined that the correspondence does not exist, and proceeding with processing at the optical network unit based on the determination that the correspondence does not exist; and
(E) causing the optical network unit to receive, from the optical line terminal, a packet informing that an authentication process has ended, the informing packet being sent as a result of said determination of the step (C) or (D).

3. The authentication method according to claim 1 or 2, wherein the identifier of the optical network unit is a usemame.

4. The authentication method according to one of claims 1 to 3, wherein each of the packets used in the authentication method includes:
a destination address field for indicating a destination of the packet;
a source address field for indicating a source of the packet;
a logical link identifier field for indicating a logical link identifier;
a type field for indicating an Ethertype of the packet;
a sub-type field for identifying the packet when its type field is identical to those of other packets;
a version field for indicating version information of the packet;
a code field for indicating an authentication operation based on the packet;
a data/protocol data unit field for indicating data of the packet; and
an frame check sequence field for indicating frame check sequence information for detecting errors of a frame, corresponding to the packet, included in information to be transmitted in the unit of frames, the frame check sequence information being arranged at a tail end of the frame.

5. The authentication method according to claim 4, wherein the code field includes:
a value "0x00" for indicating start of an authentication process;
a value "0x01" for indicating a request for authentication contents;
a value "0x02" for indicating transmission of authentication contents;
a value "0x03" for indicating an end of an authentication process;
a value "0x04" for indicating authentication success; and
a value "0x05" for indicating authentication failure.

6. An authentication apparatus in an Ethernet passive optical network comprising:
a bus interface for inputting data from an external router, and outputting data to the external router;
a control unit for receiving an Operation, Administration and Maintenance packet in accordance with an authentication process and to control data services for an optical network unit; and
a downstream unit for switching data received via the bus interface under control of the control unit.

7. The authentication apparatus according to claim 6, wherein the control unit controls a switching operation of a downstream port included in the downstream unit, based on the received Operation, Administration and Maintenance packet, a logical link ID and an Authentication Control Table and according to an Address Lookup Table Management protocol.

8. A computer-readable recording medium having, recorded within, a program executable by a processor of an optical line terminal of an Ethernet passive optical network, the program comprising:
(A) instructions which, when executed by said processor, cause the optical line terminal to receive, from an optical network unit, a packet informing of the start of an authentication process, and, responsive to that receipt, controlling the optical line terminal to transmit, to the optical network unit, a packet for requesting an identifier of the optical network unit;
(B) instructions which, when executed by said processor, cause the optical line terminal to receive from the optical network unit the identifier and to compare the identifier to a previously stored value to determine whether the identifier corresponds to the previously stored value;
(C) instructions which, when executed by said processor, cause transmission of an authentication success packet to the optical network unit when it is determined that the correspondence exists;
(D) instructions which, when executed by said processor, cause transmission of an authentication failure packet to the optical network unit when it is determined that the correspondence does not exist; and
(E) instructions which, when executed by said processor, control the optical line terminal to inform, after execution of the (C) instructions or the (D) instructions, the optical network unit that an authentication process has ended.

9. A computer-readable recording medium having, recorded within, a program executable by a processor of an optical network unit of an Ethemet passive optical network, the program comprising:
(A) instructions which, when executed by said processor, control the optical network unit to transmit, to an optical line terminal, a packet informing of the start of an authentication process, and cause the optical network unit to receive, from the optical line terminal, a packet for requesting an identifier of the optical network unit;
(B) instructions which, when executed by said processor, control the optical network unit to transmit to the optical line terminal the identifier of the optical network unit;
(C) instructions which, when executed by said processor, cause the optical network unit to receive an authentication success packet in response to transmission of the authentication success packet when it is determined that a correspondence exists between the identifier and a value previously stored in the optical line terminal, and to proceed with processing at the optical network unit based on that determination;
(D) instructions which, when executed by said processor, cause the optical network unit to receive an authentication failure packet when it is determined that the correspondence does not exist, and to proceed with processing at the optical network unit based on the determination that the correspondence does not exist; and
(E) instructions which, when executed by said processor, cause the optical network unit to receive, from the optical line terminal, a packet informing that an authentication process has ended, the informing being sent as a result of the determination that the correspondence does or does not exist.

10. The medium according to claim 8 or 9, wherein the identifier of the optical network unit is a usemame.

11. The medium according to claim 10, wherein each of the packets used in the authentication method includes:
a destination address field for indicating a destination of the packet;
a source address field for indicating a source of the packet;
a logical link identifier field for indicating a logical link identifier;
a type field for indicating an Ethertype of the packet;
a sub-type field for identifying the packet when its type field is identical to those of other packets;
a version field for indicating version information of the packet;
a code field for indicating an authentication operation based on the packet;
a data/protocol data unit field for indicating data of the packet; and
a frame check sequence field for indicating frame check sequence information for detecting errors of a frame, corresponding to the packet, included in information to be transmitted in the unit of frames, the frame check sequence information being arranged at a tail end of the frame.
